# EUROPEAN PATENT APPLICATION

(11) **EP 2 030 863 A2**
(43) Date of publication of application: **04.03.2009**
(21) Application number: 08015246.5
(22) Date of filing: 29.08.2008
(51) Int. Cl.: B62B 1/12, B62B 1/20

(54) **Multi-purpose wheelbarrow**

(30) Priority: 30.08.2007 US 935771 P
(71) Applicant: KETER PLASTIC LTD., Herzelyia 46852 (IL)
(72) Inventor: Brosh, Atar, Tel Aviv 67636 (IL); Beeri, Yehoyada, Jerusalem 97500 (IL); Ben-Avi, Ehud, D.N. Emek Yizrael 19340 (IL); Elbaz, Liran, Tel Aviv 63290 (IL); Zak, Zvika, Herzelia 46852 (IL); Levin, Tomer, Kfar Saba 44408 (IL)
(74) Representative: Minoja, Fabrizio

(57) **Abstract**

According to one aspect of the present invention, there is provided a wheelbarrow (10) comprising a storage unit (20), and a wheel assembly (30) associated with the storage unit and having at least one wheel of a predetermined diameter. The wheelbarrow further comprises at least one gripping member, also associated with the storage unit, and adapted for manipulation of the wheelbarrow by an operator. The storage unit is formed with at least one wall (24) extending along a direction tangent to the at least one wheel. The wheelbarrow is adapted to assume a first, "transport" position in which the wheelbarrow is transportable about upon the wheel assembly, and a second, "L" position in which the wheelbarrow has an essentially vertical orientation with respect to a surface, in which the wheelbarrow is supported by the wheel assembly and the wall (24).

## Description

### FIELD OF THE INVENTION

This invention relates to wheelbarrows, in particular, wheelbarrows adapted for assuming an L position.

### BACKGROUND OF THE INVENTION

Wheelbarrows are known in the art to provide a convenient way of transporting a desired amount of material or items from one place to another. Common wheelbarrows comprise a storage unit, two gripping handles and a wheel attached to the storage unit, wherein an operator grabbing the handles, may maneuver the wheelbarrow about upon the wheel.

A variety of modification on common wheelbarrow have been suggested in the art in order to provide a more convenient maneuvering thereof, more storage space, means for stable positioning said wheelbarrow on the ground etc.

Also known in the art are hand trucks which typically are L-shaped handcarts with handles at one end, two or more wheels at the base, with a small ledge to set objects on, flat against the floor when the hand-truck is upright. The objects to be moved, typically of regular shape, are tilted forward, the ledge is inserted underneath them, and the objects allowed to tilt back and rest on the ledge. Then the truck and objects are tilted backward until the weight is balanced over the large wheels, making otherwise bulky and heavy objects easier to move.

One such modification is disclosed in GB794752 directed to a wheelbarrow which comprises a pair of side members extending substantially parallel and longitudinally of the wheelbarrow, and a transverse front member, the side members forming handle parts on their rear extremities and being downwardly and forwardly inclined, in the normal upright position of the barrow, from the handle parts to the wheel mounting position, to form rear support parts for the rear wall of the pan of the barrow and beyond that position being upwardly and forwardly inclined to meet the transverse front member with which they form a front support part for the front wall of the pan.

Another modification regarding the capacity of the storage unit is disclose in US 4,109,933 which directed to a folding wheelbarrow which can be constructed so as to utilize a wheelbarrow body which is adapted to be folded or manipulated from a normal position into a folded position. Such a body is attached to a wheel support serving to carry a normal wheel and handles. In order to achieve a satisfactory folding action each such body is constructed so as to have a bottom wall including at least two bottom panels, a front wall having at least two front wall panels and sides connected by the bottom wall panel and the front wall panel. A plurality of separate linkage hinges connect the bottom and front wall panels and the sides so as to permit motion of the panels and the sides during manipulation of the body from a normal position into a folded position. A latch or latch-type structure is preferably used to connect at least two parts which pivot relative to one another during such folding so as to hold the body in its normal position.

Another modification regarding the dual-purpose wheelbarrow is disclosed in US 7,168,712 which is concerned with a multi-function hand truck is convertible to allow lifting of a load at a spaced distance from the truck and/or is convertible for use as a wheelbarrow. A pair of lifting arms co-operate with the frame of the hand truck to extend outwardly therefrom and allow the frame of the hand truck to provide a mechanical advantage for lifting. The wheels of the truck are moveable rearwardly for conversion to a wheelbarrow mode. An open top container is positioned within the frame of the hand truck for receiving material. The multi-function hand truck is efficiently stored in a vertical orientation.

### SUMMARY OF THE INVENTION

According to one aspect of the present invention, there is provided a wheelbarrow comprising a storage unit, a wheel assembly associated with said storage unit and having at least one wheel of a predetermined diameter, and at least one gripping member, also associated with said storage unit, and adapted for manipulation of said wheelbarrow by an operator; said storage unit is formed with at least one wall extending along a direction tangent to said at least one wheel whereby said wheelbarrow is adapted to assume a first, "transport" position in which said wheelbarrow is transportable about upon said wheel assembly, and a second, "L" position in which said wheelbarrow has an essentially vertical orientation with respect to a surface in which said wheelbarrow is supported by said wheel assembly and said wall.

The storage unit may be further formed with a bottom extension adapted to provide support for the wheelbarrow allowing it to assume a third, "stationary" position. In this position, the wheelbarrow may be positioned on a surface without an operator supporting it by said at least one gripping element.

Said storage unit may be formed with a bottom, front and side walls, and may be designed such as to allow nesting of one wheelbarrow within a similar corresponding wheelbarrow, thereby allowing stacking of a plurality of wheelbarrows one on top of the other in a compact manner.

The rim of the wall of said storage unit may be adapted for attachment thereto of a shoveling edge so that in said "L" position, said shoveling edge is in contact with said surface and may be used to scoop a certain amount of material or items positioned on said surface into said storage unit. Alternatively, the shoveling edge may be integrally formed with said storage unit. The shoveling edge may be formed as a wedge, facilitating easier scooping of said material into said storage unit, and may be made of various materials, e.g. plastic, steel, etc. The scooped material/items may be, for example, sand, cement, bricks, etc. Said storage unit may further comprise a barrier wall adapted to prevent said material from falling out of the storage unit when said wheelbarrow is in said "L" position.

The bottom end of said storage unit may be formed with a foot-rest adapted to allow and operator, when said wheelbarrow is in said "L" position, to apply pressure using his foot in order to scoop material into said storage unit. According to a specific embodiment, said foot rest may be constituted by said wheel assembly.

Said storage unit may further comprise a protective cover adapted to protect any material within said wheelbarrow from exposure to rain, environmental damage etc. for example, when transporting the material from one location to another. The protective cover may be detachably attachable to the storage unit and/or be stored away within a pre-designed enclosure of the storage unit. The protective cover may be made of nylon, canvas etc.

According to a specific embodiment, said storage unit may be formed of a first portion and a second portion, hingedly articulated to each other, each portion having a bottom wall, a front wall and at least one side wall extending from said bottom wall. The storage unit may assume a first storage position, i.e. "container position", and a second storage position, i.e. 'wheelbarrow' position.

In said container position, the front wall of said first portion may be essentially flush against the front wall of said second portion to form a uniform front surface, the bottom walls of each of the portions being spaced apart by said at least one side wall of each portion. In this position, the two portions of said storage unit may form a container, wherein in said "L" position, said uniform front surface is adapted to support the weight of a material stored within said storage unit. According to a specific embodiment, said container is open at the end opposite said uniform front surface so as to allow top loading of material therein when said wheelbarrow is in said "L" position.

Said storage unit may comprise a securing mechanism adapted to securely connect said first portion to said second portion in order to said container from opening by rotation of one of said portions about the hinge. Said securing mechanism may be in the form of a latch arrangement, snapping arrangement, etc.

The rim of each portion of said storage unit may be formed with a rail and said latch mechanism may be slidable along said rail. Thus, the securing mechanism may also secure the two portions when in the "wheelbarrow" position, for example, by slidingly displacing the latch to the seam line between said first and said second portion, so as to embrace the rim of both portions.

In said wheelbarrow position, the bottom wall of said first portion may be essentially flush against the bottom wall of said second portion to form a uniform bottom surface, the front walls of each of the portions being spaced apart by said at least one side wall of each portion. In this position, the two portions of said storage unit may form an open wheelbarrow storage unit surrounded by the front and side walls of each portion. In a "transport" position, said uniform bottom surface is adapted to support the weight of a material loaded on said storage unit.

Each of the portions may be perforated allowing transport of material requiring circulation of air etc. Said first and/or said second portion may be fitted with a lid adapted to cover the top end of the container at the "container" position. The lid may be articulated to either of said portions, for example, using a hinge. The gripping element may be articulated to the first portion of said storage unit.

According to a specific embodiment, said wheelbarrow may comprise a support frame. Said support frame may be formed of at least one longitudinal bar and at least one transverse bar, adapted to provide support for said storage unit. According to a specific embodiment, said support frame is formed of two longitudinal bars and several transverse bars providing the frame with required rigidity. Each of the two longitudinal bars may be formed with said gripping element. Each of said two longitudinal bars may also be telescopic, allowing the bars to extend so as to provide additional length to the frame when said storage unit is at the "wheelbarrow" position.

Said storage unit may be detachably attachable to/from said support frame. For this purpose, said storage unit may be fitted with at least one hook formed at the bottom wall thereof, whereby said storage unit may be hung on said at least one transverse bar of the support frame. Alternatively, the side and bottom walls of said storage unit may be formed with at least one longitudinal rib adapted to slide within at least one corresponding longitudinal rail formed within said longitudinal bar. This may provide further stability and prevent spontaneous disengagement of said storage unit from said support frame.

The storage unit may also comprise a handle adapted for carrying said storage unit when in said 'container' position, thereby transforming it into a portable storage unit module. According to a specific embodiment, said handle may comprise the securing mechanism securing said portions to one another. The handle may also be used for attaching said storage unit to said support frame.

Said support frame may also comprise a back support hingedly articulated to one of said transverse bars and adapted to provide support for the wheelbarrow when in positioned horizontally on said surface in a "transport" position by assuming a position in which it extends between said support frame and said surface. Said back support may have a closed position in which it extends essentially in the direction of the longitudinal bars and an open position in which said back support extends perpendicularly to said frame, whereby, in a "transport" position, said back support assumes the position described above. Said back support may be freely attached to said transverse bar so as to automatically assume its position be gravitational force.

Said support frame may further comprise a rotatable platform hingedly articulated to a bottom transverse bar of said support frame and adapted to be tilted to become essentially perpendicular to said longitudinal axis in order to provide support for said storage unit and/or to various items positioned thereon. In this configuration, the wheelbarrow may be used as a hand truck.

Said platform may be of greater dimension than the front walls of said first and second portions wherein when said storage unit is attached to said support frame, said platform may extend beyond said front wall. In this case, said platform may be provided with a shoveling edge as described previously with respect to said storage unit to provide convenient scooping of material into said storage unit.

The wheel assembly of said wheelbarrow may be formed of two wheels mounted on a mutual axis, said wheels being spaced apart to provide said wheelbarrow with stability during both first and second position. The wheel assembly may be adapted to be detachably attached to the bottom of said storage unit or said support frame. Alternatively, said mutual axis may be integrally formed with said storage unit, wherein said wheels are adapted to be detachably attachable to said mutual axis. This may allow convenient storage of a plurality of wheelbarrows within a predetermined space, e.g. during shipment.

The wheelbarrow may comprise two gripping elements adapted for the hands of an operator, each gripping element being formed with two gripping surfaces angled to each other, a first gripping surface being adapted for gripping in said first position of the wheelbarrow and said second gripping surface being adapted for gripping in said second "L" position. Alternatively, each of said gripping elements may be formed as a closed frame having an inner circumference, and a single gripping surface adapted to be freely displaced along said inner circumference, allowing convenient gripping thereof both in said first "transport" position and in said second "L" position.

According to a specific embodiment of the present invention, said wheelbarrow excluding said wheels, may be made of plastic and formed as a single injection molding element.

According to another aspect of the present invention there is provided a storage unit for a wheelbarrow comprising a first and a second storage unit portions, each portion comprising a bottom wall, a front wall and two side walls, said second portion being articulated to said first portion so as to allow rotation thereof about said first portion about an axis, said storage unit having at least two positions:
a) a container position in which the front wall of said first portion is essentially flush against the front wall of said second portion to form a uniform front surface, the bottom walls of each of the portions being spaced apart by said side walls of each portion to form a container.
b) a wheelbarrow position in which the bottom wall of said first portion is essentially flush against the bottom wall of said second portion to form a uniform bottom surface, the front walls of each of the portions being spaced apart by said side walls of each portion to form wheelbarrow platform.

According to a further aspect of the present invention there is provided a wheelbarrow made of a single injection molding element, said wheelbarrow comprising a storage unit, at least one gripping means and an attachment port for a wheel assembly; said storage unit being formed with at least one wall extending along a direction tangent to said at least one wheel such whereby said wheelbarrow is adapted to assume a first "transport" position in which said wheelbarrow is transportable about upon said wheel assembly, and a second position in which said wheelbarrow has an essentially vertical "L" position in which at least a portion of said wall and said at least one wheel rest one a single planar surface.

### BRIEF DESCRIPTION OF THE DRAWINGS

In order to understand the invention and to see how it may be carried out in practice, embodiments will now be described, by way of non-limiting examples only, with reference to the accompanying drawings, in which:
**Fig. 1** is a front isometric view of a wheelbarrow according to the present invention;
**Fig. 2** is a rear isometric view of the wheelbarrow of Fig. 1;
**Fig. 3A** is a side view of the wheelbarrow of Fig. 1 when in first, "stationary" position;
**Fig. 3B** is a side view of the wheelbarrow of Fig. 1 when in a second, "transport" position;
**Fig. 3C** is a side view of the wheelbarrow of Fig. 1 when in a third, upright L-like position;
**Fig. 4A** is a bottom isometric view of the wheelbarrow of Fig. 1;
Fig. 4B is a bottom isometric view of the wheelbarrow of Fig. 1 without a wheel assembly;
**Fig. 5** is an enlarged view of a gripping element of the wheelbarrow of Fig. 1;
**Fig. 6** is an isometric view of another wheelbarrow according to the present invention;
**Fig. 7A** is a side view of the wheelbarrow of Fig. 6 in a first, "stationary" position;
**Fig. 7B** is a side view of the wheelbarrow of Fig. 6 in a second, "transport" position;
**Fig. 7C** is a side view of the wheelbarrow of Fig. 6 in an upright "L" position;
**Fig. 8** is an isometric view of the wheelbarrow of Fig. 6;
**Fig. 9** is a side view of the wheelbarrow of Fig. 8 when converted into a "container" position;
**Fig. 10** is an isometric view of a wheelbarrow according to yet another embodiment of the present invention;
**Fig. 11** is an isometric view of the wheelbarrow of Fig. 10 without a storage unit at an upright position; and
**Fig. 12** is an isometric view of the wheelbarrow of Fig. 10 without a storage unit at an angled position with deployed support legs.

### DETAILED DESCRIPTION OF EMBODIMENTS

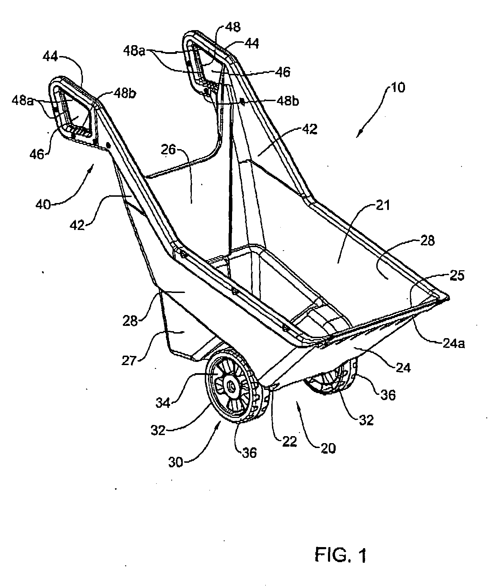

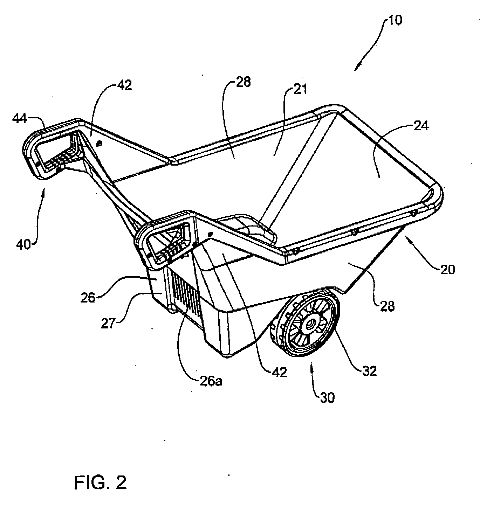

Referring to Figs. 1 and 2, a wheelbarrow generally designated **10** is shown comprising a storage unit **20,** a wheel assembly **30** attached to the storage unit **20**, and a handling portion **40** integrally formed with the storage unit **20.**

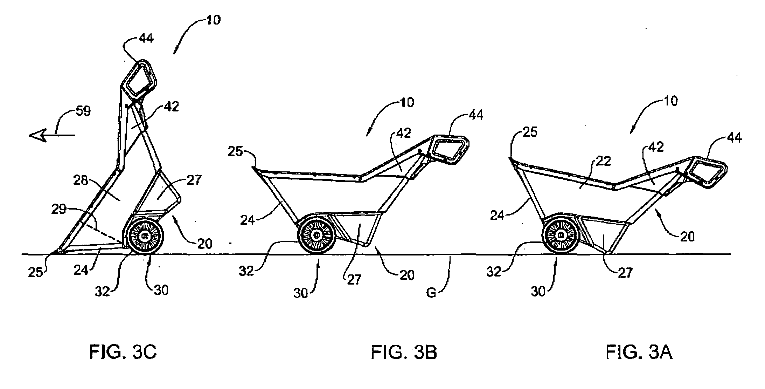

The storage unit **20** is formed of a bottom wall **22**, a front wall **24**, a rear wall 26 and two side walls **28**, defining together a storage space **21** therein. The walls **24, 26** and **28** taper outwardly from the bottom wall **22** so as to allow manufacturing of the storage unit **20** by single injection molding. The tapering of the walls may also facilitate nesting of one wheelbarrow **10** within the storage space **21** of another wheelbarrow **10** allowing convenient stacking of wheelbarrows 10 one on top of the other. A top edge **24a** of the front wall **24** is formed with a shoveling edge **25** fitted for scooping/shoveling of material from the ground as will be explained in detail with respect to Fig. 3.

In the present example the shoveling edge **25** is made of metal secured to the edge of the front wall **24**, however the shoveling edge may be made of other material e.g. reinforced plastic material.

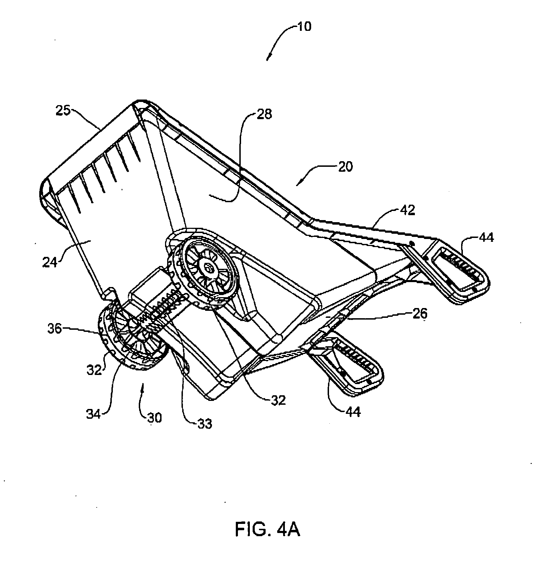

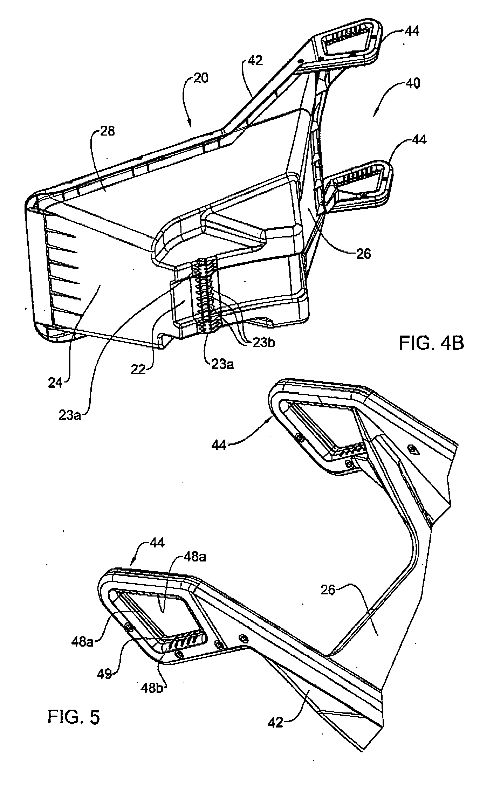

The wheel assembly **30** comprises two wheels **32** mounted on a common axle **33** (shown Fig. **4A**), each wheel being formed of a rigid core **34** and a tire **36**. The core **34** is made of strong plastic and the tire **36** may be made of rubber or other material, optionally more resilient. However, the core and tire may be integral as well. The common axle **33** is mounted to the storage unit as will be explained with respect to Figs. 4A and 4B.

The handling portion **40** is formed of two extensions **42** extending upwardly at an angle from the storage unit **20** to serve as handles for the wheelbarrow **10**. Each extension **42** is formed at its distal end with a gripping portion in the form of a rectangular handle **44** defining a space **46** therein and having an inside circumference **48**. With further reference to Fig. 5, the handle **44** is adapted for the grip of an operator of the wheelbarrow and its inside circumference **48** is formed of two section **48a** and **48b** the purpose of which will be explained later.

Turning to Figs. 3A to 3C, the wheelbarrow **10** is shown in several respective positions. At the "stationary" position of Fig. 3A, the wheelbarrow **10** rests on the ground **G** upon the wheel assembly **32** and on a rear support extension **27** of the storage unit **20**, wherein a load may rest securely within the storage unit **20**. The extension **27** is hollow and forms part of the storage space **21** of the storage unit **20**. Reverting to Fig. 2, the extension **27** extends almost throughout the width of the wheelbarrow **10.** Upon nesting, the extension of one wheelbarrow nests within the extension of another wheelbarrow.

At the "transport" position (Fig. 3B), the extension **27** is lifted off the ground G by gripping the handles **44,** allowing maneuvering of the wheelbarrow **10** about the ground **G** upon the wheel assembly **32** alone. When maneuvering the wheelbarrow **10,** an operator may conveniently place his hands on the first section **48a** of the inside circumference of the handle **44,** allowing easy handling of the wheelbarrow **10**. Alternatively, the operator may opt to manipulate the wheelbarrow by gripping the handle **44** at its other portions **48b** and **49**. In the "transport" position, most of the load of the wheelbarrow **10** is evenly distributed and supported by the wheel assembly **30** rather than by the operator, allowing carrying great amounts of material.

At the upright L-like position, the wheelbarrow **10** rests on the ground **G** supported by the wheels 32 of the wheel assembly **30** and over the front wall **24,** resting substantially flush over the ground surface **G**. The tapering angle of the front wall **24** with respect to the bottom wall **22** is designed such that in the "L" position, it is essentially flush against the ground **G**.

The shoveling edge **25** formed at the top end **24a** of the front wall **24** allows scooping/shoveling a substantial amount of loose material or solid material (not shown) into the wheelbarrow **10** by pushing the wheelbarrow **10** forward against the material. When loading the wheelbarrow **10** with material, the pushing forwards movement may be aided by the operator presenting his foot either on the wheel assembly **30** or on the extension **27.** When unloading a loaded wheelbarrow **10,** an operator may place his hands on the second gripping section **48**b and tilt the wheelbarrow **10** about the shoveling edge **25** (in direction of arrow **59**) to cause material within the storage unit to be unloaded.

According to a specific embodiment (shown in Fig. 3B by a dashed line), a barrier wall **29** is provided within the storage unit **20** adapted to prevent material loaded therein from falling out of the wheelbarrow **10** at the upright position of Fig. 3C. The barrier wall **29** may be a removable article securely received within slots formed in the side walls **28** and base **22,** or it may be hingidly secured to the bottom base **22** and rotated about the bottom **22** of the storage unit **20** when not in use, e.g. during loading of the wheelbarrow **10.**

Turning to Figs. 4A and 4B, the wheel assembly **30** is attached to the storage unit **20** via its axle **33**. In assembly the axle **33** is inserted through bearings **23a,** with the support members 23b acting on the axle 33 to prevent it from buckling upwards and for supporting the base wall **22** of the storage unit 20. Once the axle **33** is inserted, the wheels **32** are mounted on each side of the axle to form the wheel assembly **30**. According to a specific embodiment (not shown), the axle is formed of two sections, each having a distal end and a proximal end. The proximal ends of the axle sections are adapted to be connected to each other using a snap/screwing engagement, the distal ends of the axle sections being adapted for mounting thereon of the wheels 32. According to a specific design variation (not shown), the axle **33** is integrally formed with the storage unit **20** and the wheels are rotatably mounted thereon.

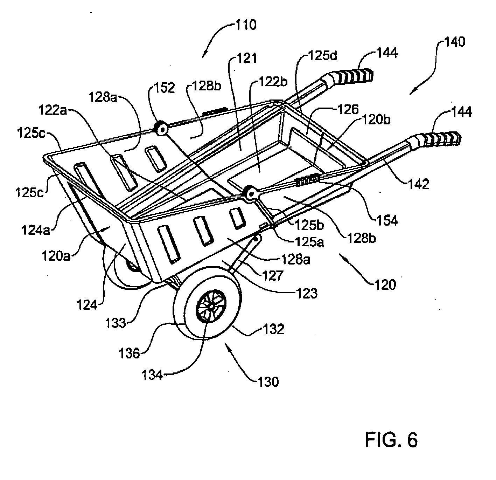

It is appreciated that the wheelbarrow 10 is typically a single mold article ('mono-block'). However component injection may be used for some particular portions, e.g. hand grips, for obtaining reinforced portions of the structure and for a multi-colored article. Referring to Fig. 6, there is illustrated an isometric view of another embodiment of the wheelbarrow according to the present invention, generally designated **110,** and comprising a storage unit **120,** a wheel assembly **130** attached to the storage unit **120,** and a handling portion **140.**

The storage unit **120** is formed of two portions **120a** and **120b**, the first portion **120a** having a bottom wall **122a,** a front wall **124**, and two side walls **128a,** and the second portion **120b** having a bottom wall **122b**, a rear wall **126**, and two side walls **128b**, both portions defining a storage space **121** therein. The bottom walls **122a** and **122b** are substantially flush at the position illustrated in Fig. 6.

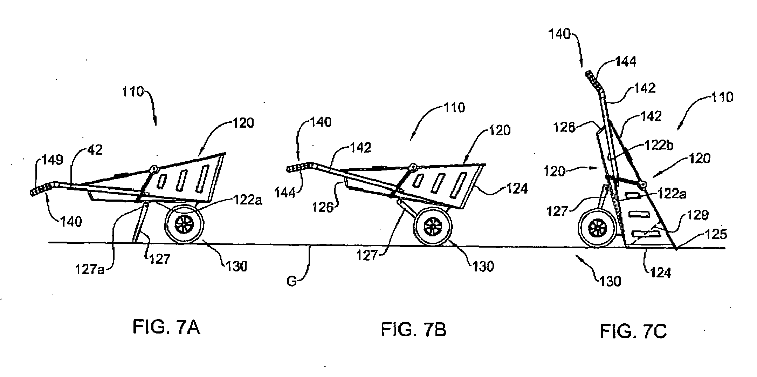

The walls **124, 126, 128a** and **128b** taper slightly outwardly from the bottom walls **122a** and **122b**. The tapering of the walls may also facilitate nesting of one storage unit **120** within the storage space **121** of another storage unit **120,** allowing convenient stacking of storage units one on top of the other. A top end **124a** of the front wall **124** is formed with a shoveling edge **125** fitted for scooping/shoveling of material from the ground as will be explained in detail with respect to Fig. 7C.

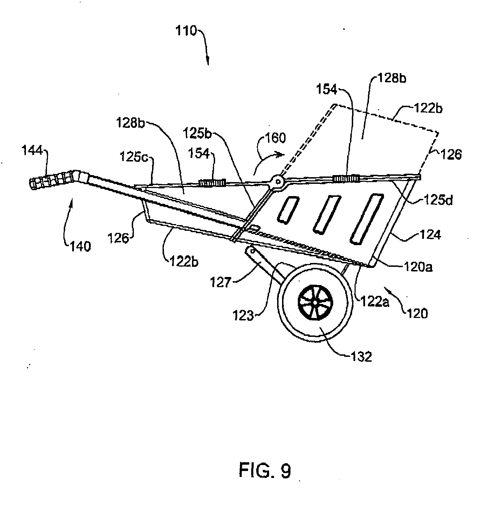

The portions **120a, 120b** of the storage unit **120** are pivotally articulated to each other at **152**, the purpose of which will be explained in detail later with respect to Fig. 9.

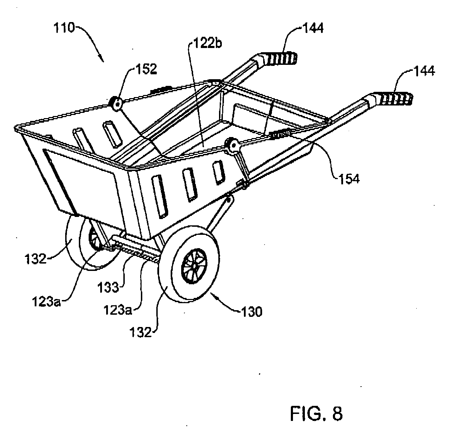

The wheel assembly **130** comprises two wheels **132** mounted on a common axle **133** (similar to the embodiment shown Fig. 4A), each wheel being formed of a hard core **134** and a softer lining **136**. The common axle **133** is mounted on the storage unit as will be explained with respect to Fig. 8.

The handling portion **140** is in the form of two arm extensions **142** extending upwardly at an angle from the first portion **120a** of the storage unit **120,** serving as handles for the wheelbarrow **110**. Each extension **142** is formed at its distal end with a gripping portion in the form of gripping handle **144.**

Turning to Figs. 7A to 7C, the wheelbarrow **110** is shown at its "stationary", "transport" and "L" (up-right) positions, respectively. At the "stationary" position, the wheelbarrow **110** rests on the ground **G** upon the wheel assembly **130** and on a foldable support leg **127** extending from the first portion **120a** of the storage unit **120**, wherein a load may rest securely within the storage unit **120.** The support leg **127** is hingedly articulated to the bottom of the first portion **120a** and is adapted to be rotated about an axis of a hinge **127a** to be deployed when the wheelbarrow **110** is at the "stationary" position. The support leg **127** is pivotally secured to the hinge **127a** such that when the wheelbarrow **110** is brought to the "stationary" position, gravitational forces pull it down, automatically deploying it. However, the arrangement my be such that the support leg **127** is retained at a first discrete position where it is collapsed and prevented from dangling below the wheelbarrow **110,** so as not interfere with manipulating thereof (Figs. 7B and 7C), or at a second discrete position where it is deployed as in Fig. 7A.

At the "transport" position (Fig. 7B), the support leg **127** is disengaged from the ground **G** and the wheelbarrow is lifted by gripping the handles **44**, allowing maneuvering of the wheelbarrow **10** over the ground G upon the wheel assembly **30** alone. In the "transport" position, most of the load of the wheelbarrow **110** and its contents is distributed over the first portion **120a** and supported by the wheel assembly **130** rather than by the operator, allowing carrying great amounts of material.

In the upright, so-called "L" position, the wheelbarrow **110** rests on the ground **G** supported by the wheel assembly **130** and front wall **124.** The tapering angle of the front wall **124** with respect to the bottom walls 122a and **122b** is designed such that at the "L" position, it is essentially flush against the ground **G.**

The shoveling edge **125** formed at the top end **124a** of the front wall **124** allows scooping a substantial amount of material (not shown) into the wheelbarrow **110** by pushing the wheelbarrow **110** forward, for example against a heap of material. When loading the wheelbarrow **110** with material, the pushing forwards movement may be aided by the operator presenting his foot either on the wheel assembly **130.**

According to a specific embodiment a partial barrier wall **129** (fig. 7C) is provided within the storage unit **120** between at a fore end of the first portion **120a,** adapted to prevent material loaded therein from falling out of the wheelbarrow **110**, similar to the arrangement shown Fig. 3C. The barrier wall **129** may be removed or rotated about the bottom **122** of the storage unit **120** during loading of the wheelbarrow **110.**

Turning to Fig. 8, the wheel assembly **130** is attached to the storage unit **120** via its axle **133.** In assembly the axle **133** is inserted through bearings **123a.** Once the axle **133** is inserted, the wheels **132** are mounted on each side of the axle to form the wheel assembly **130.** According to a specific embodiment (not shown), the axle is formed of two sections, each having a distal end and a proximal end. The proximal ends of the axle sections are adapted to be connected to each other using a snap/screwing engagement, the distal ends of the axle sections being adapted for mounting thereon of the wheels. According to another design variation (not shown), the axle is integrally formed with the storage unit **120.**

Turning to Fig. 9, and with reference to Fig. 6, the storage unit **120** may assume at least one of two positions: a "wheelbarrow" position and a "container" position. In the "wheelbarrow" position depicted in Figs. 6 to 8, the two portions **120a** and **120b** are oriented such that the bottom walls **122a, 122b** of the portions form a uniform bottom surface **122,** surrounded by the front wall **124**, rear wall **126** and side walls **128a** and **128b** of the portions. The portions **120a, 120b** are in contact via a rim **125a, 125b** of the first and second portion respectively. In this position, as previously described, the storage unit 120 serves as a storage unit of a wheelbarrow **110.**

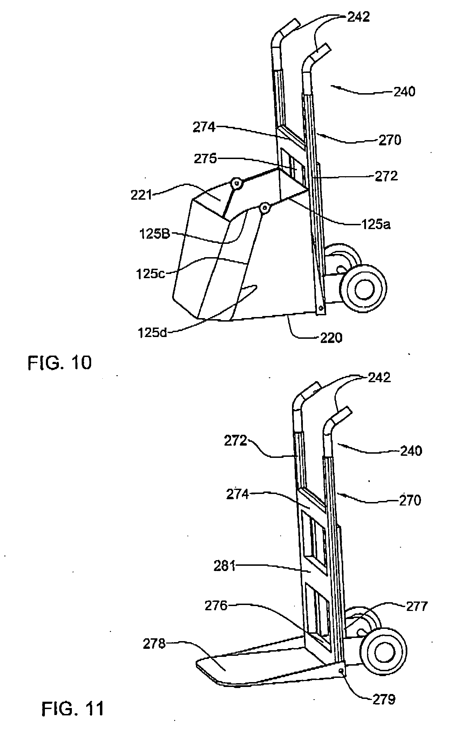

At the 'container' position (figs. 9 and 10), the second portion **120b** is rotated about the hinge **127a** in the direction of arrow **160** (into the position illustrated by dashed lines in Fig. 9 and as seen in Fig. 10) such that the rear wall **126** thereof becomes flush with the front wall **126** of the first portion **120b** to form a uniform surface. The portions **120a, 120b** are connected through the rims **125c, 125d.** In order to secure the two portions, latches **154** are provided along the rim **125d** adapted to connect the latter rim to the rip **125c** of the first portion **120a.** the rims **125c, 125d** of the portions **120a, 120b** may be fitted with a sealing arrangement, e.g. a resilient rim or the like, such that at the "container" position loose material and liquids may be contained in the confined space **221** (Fig. 10). In this position, when the wheelbarrow **110** is positioned in the upright "L" position, it may be top loaded with any desired load since the rims **125a, 125b** define an opening directed upwards.

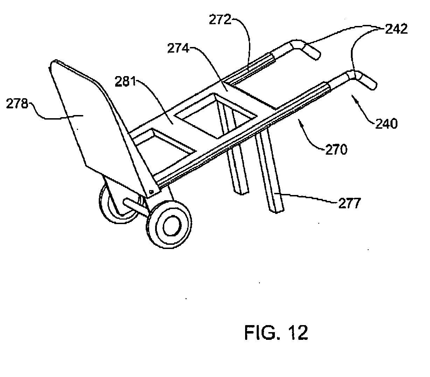

Turning now to Figs. 10 to 12, a similar embodiment of a wheelbarrow **210** according to the present invention is shown, comprising a support frame **270** constituted by two longitudinal bars **272**, a top transverse bar **274** and a bottom transverse bar 276. The support frame further comprises two support legs **227** (shown Fig. 12) similar to the support legs **127** of the embodiment illustrated in connection with Figs 7A to 7C, for supporting the wheelbarrow at the "stationary position".

The wheelbarrow **210** further comprises a pivotable platform **278** which, secured at a bottom of the support frame **270,** will be discussed in details later.

The support frame **270** forms the skeleton of the wheelbarrow **210** and the handling portion **240** and wheel assembly **230** are attached thereon to form a part thereof. The storage unit **220** is constructed similarly to that disclosed in the embodiment of Figs 7 to 9 and operates essentially the same way as with regards to the storage unit **120** previously described. The storage unit **220** is fitted for detachably attaching to the support frame **270**.At the attached position (Fig. 10) it rests over the pivotable platform **278** and is attached to a secure latch **281** (Fig. 11) for the purpose of which the storage unit **220** is provided with two hooks (not shown) allowing it to be easily attached and detached, though in a fast and secure manner.

The storage unit **220** may be detached from the support frame **270** so as to create a portable storage unit. For this purpose, the storage unit **220** is formed with a carrying handle **225** (Fig. **10**) allowing an operator to easily carry the storage unit **220** from one location to another.

The handling portion **240** of the wheelbarrow **210** comprises two angled handles **242** which are positioned within the longitudinal bars **272** which are hollow so as to form a telescopic member. Thus, the handles **242** may be extended when the storage unit **220** is in the "wheelbarrow" position and retracted when the storage unit **220** is in the "container" position.

The pivotal platform **278** is articulated to the support frame **270** by a hinge **279**. In the 'container' position, the platform **278** may assume a position substantially parallel to the longitudinal bars **272,** being essentially flush with the support frame **270.** Alternatively, the platform 278 may assume a position perpendicular to the longitudinal bars **272** (shown Fig. 11) so as to support the weight of the storage unit **220.** When the storage unit **220** is removed from the support frame **270,** the platform 278 may be extended as shown in Fig. 11 to transform the wheelbarrow **210** into a hand truck.

Those skilled in the art to which this invention pertains will readily appreciate that numerous changes, variations, and modifications can be made without departing from the scope of the invention, *mutatis mutandis.*

## Claims

1. According to the present invention there is provided a wheelbarrow comprising a storage unit, a wheel assembly associated with said storage unit and having at least one wheel of a predetermined diameter, and at least one gripping member, also associated with said storage unit, and adapted for manipulation of said wheelbarrow by an operator; said storage unit is formed with at least one wall extending along a direction tangent to said at least one wheel whereby said wheelbarrow is adapted to assume a first, "transport" position in which said wheelbarrow is transportable about upon said wheel assembly, and a second, "L" position in which said wheelbarrow has an essentially vertical orientation with respect to a surface in which said wheelbarrow is supported by said wheel assembly and said wall.

2. A wheelbarrow according to Claim 1, wherein said storage unit is further formed with a bottom extension adapted to provide support for the wheelbarrow allowing it to assume a third, "stationary" position.

3. A wheelbarrow according to Claim 1, wherein said storage unit is formed with a bottom, front and side walls, and is designed so as to allow nesting of one wheelbarrow within a similar corresponding wheelbarrow, to thereby allow stacking of a plurality of wheelbarrows one on top of the other in a compact manner.

4. A wheelbarrow according to Claim 1, wherein said storage unit further comprises a rim with a shoveling edge, wherein in said "L" position, said shoveling edge is in contact with said surface.

5. A wheelbarrow according to Claim 1, wherein said storage unit further comprises a barrier wall adapted to prevent scooped material from falling out of the storage unit when said wheelbarrow is in said "L" position.

6. A wheelbarrow according to Claim 1, wherein the bottom end of said storage unit is formed with a foot-rest adapted to allow an operator, when said wheelbarrow is in said "L" position, to apply pressure using his foot in order to scoop material into said storage unit.

7. A wheelbarrow according to Claim 1, wherein said storage unit is formed of a first portion and a second portion, articulated to each other via a hinge, each portion having a bottom wall, a front wall and at least one side wall extending from said bottom wall.

8. A wheelbarrow according to Claim 7, wherein said storage unit is adapted to assume a first storage position, i.e. "container position", and a second storage position, i.e. "wheelbarrow" position.

9. A wheelbarrow according to Claim 8, wherein in said container position, the front wall of said first portion is essentially flush against the front wall of said second portion to form a uniform front surface, and the bottom walls of each of the portions being spaced apart by said at least one side wall of each portion, to form a container.

10. A wheelbarrow according to Claim 9, wherein in said "L" position, said uniform front surface is adapted to support the weight of a material stored within said storage unit.

11. A wheelbarrow according to Claim 9, said container is open at the end opposite said uniform front surface so as to allow top loading of material therein when said wheelbarrow is in said "L" position.

12. A wheelbarrow according to Claim 11, wherein said storage unit comprises a securing mechanism adapted for securely connecting said first portion to said second portion in order to prevent said container from opening by rotation of one of said portions about the hinge.

13. A wheelbarrow according to Claim 12, wherein the rim of each portion of said storage unit is formed with a rail and said securing mechanism is slidable along said rail.

14. A wheelbarrow according to Claim 11, wherein in said wheelbarrow position, the bottom wall of said first portion is essentially flush against the bottom wall of said second portion to form a uniform bottom surface to form an open wheelbarrow storage unit surrounded by the front and side walls of each portion.

15. A wheelbarrow according to Claim 14, wherein in said "transport" position, said uniform bottom surface is adapted to support the weight of a material loaded onto said storage unit.

16. A wheelbarrow according to Claim 1, wherein said wheelbarrow further comprises a support frame formed of at least one longitudinal bar and at least one transverse bar, adapted to provide support for said storage unit.

17. A wheelbarrow according to Claim 16, wherein said support frame also comprise a back support hingedly articulated to said support frame.

18. A wheelbarrow according to Claim 17, wherein said back support is adapted to assume a closed position in which it extends essentially in the direction of the longitudinal bars and an open position in which it extends perpendicularly to said frame.

19. A wheelbarrow according to Claim 18, wherein said back support is freely attached to said transverse bar so as to automatically assume its position be gravitational force.

20. A wheelbarrow according to Claim 18, wherein said back support is in the form of a platform adapted to be tilted to become essentially perpendicular to said frame in order to provide support for said storage unit and/or to various items positioned thereon, to be used as a hand truck.

21. A wheelbarrow according to Claim 1, wherein said wheelbarrow comprises two gripping elements adapted for the hands of an operator, adapted for gripping thereof in both said first position of the wheelbarrow and said second gripping surface being adapted for gripping in said second "L" position.

22. A wheelbarrow according to Claim 1, wherein said wheelbarrow excluding said wheel assembly, is made of plastic and formed as a single injection molding element.

23. A storage unit for a wheelbarrow comprising a first and a second storage unit portions, each portion comprising a bottom wall, a front wall and two side walls, said second portion being articulated to said first portion so as to allow rotation thereof about said first portion about an axis, said storage unit having at least two positions:
a. a container position in which the front wall of said first portion is essentially flush against the front wall of said second portion to form a uniform front surface, the bottom walls of each of the portions being spaced apart by said side walls of each portion to form a container;
b. a wheelbarrow position in which the bottom wall of said first portion is essentially flush against the bottom wall of said second portion to form a uniform bottom surface, the front walls of each of the portions being spaced apart by said side walls of each portion to form wheelbarrow platform.

24. A wheelbarrow made of a single injection molding element, said wheelbarrow comprising a storage unit, at least one gripping means and an attachment port for a wheel assembly comprising at least one wheel; said storage unit being formed with at least one wall extending along a direction tangent to said at least one wheel such whereby said wheelbarrow is adapted to assume a first "transport" position in which said wheelbarrow is transportable about upon said wheel assembly, and a second position in which said wheelbarrow has an essentially vertical "L" position in which at least a portion of said wall and said at least one wheel rest one a single planar surface.
